# EUROPEAN PATENT APPLICATION

(11) **EP 4 412 034 A1**
(43) Date of publication of application: **07.08.2024**
(21) Application number: 22874772.1
(22) Date of filing: 22.09.2022
(51) Int. Cl.: H02J 50/00, H02J 50/12, H02J 50/20, H02J 50/90, H02J 7/00

(54) **CHARGING APPARATUS AND CHARGING METHOD**

(30) Priority: 29.09.2021 CN 202111150446
(71) Applicant: Vivo Mobile Communication Co., Ltd., Dongguan, Guangdong 523863 (CN)
(72) Inventor: XIE, Chenghan, Dongguan, Guangdong 523863 (CN); HE, Yifan, Dongguan, Guangdong 523863 (CN); ZHANG, Pengyao, Dongguan, Guangdong 523863 (CN)
(74) Representative: Conti, Marco
(86) International application number: PCT/CN2022/120603
(87) International publication number: WO 2023/051386

(57) **Abstract**

This application relates to the technical field of electronic products, and discloses a charging device and a charging method. The charging device includes a housing, a resonant wireless charging apparatus, an air-spaced charging apparatus, and a circuit board. The housing includes an accommodating cavity and a charging position disposed on an outer surface of the housing. The resonant wireless charging apparatus is disposed in the housing, and a discharging end of the resonant wireless charging apparatus is located at the charging position. The air-spaced charging apparatus includes an antenna assembly, and the antenna assembly is disposed in the accommodating cavity. The circuit board includes a first charging circuit and a feed source. The first charging circuit is electrically connected to the resonant wireless charging apparatus, and the feed source is connected to the antenna assembly to implement air-spaced charging.

## Description

### CROSS-REFERENCE TO RELATED APPLICATIONS

This application claims priority to Chinese Patent Application No. 202111150446.9, filed on September 29, 2021 in China, which is incorporated herein by reference in its entirety.

### TECHNICAL FIELD

This application relates to the technical field of electronic products, and in particular to a charging device and a charging method.

### BACKGROUND

With the development of science and technology, a wireless charging device is applied to a plurality of fields. For an existing wireless charging device, a to-be-charged device usually needs to be placed at a charging position of the wireless charging device. In this way, a user fails to use the to-be-charged device in a charging process. It can be learned that, when the existing wireless charging device is performing charging, there is a problem that it is not easy for the user to use the to-be-charged device.

### SUMMARY

This application provides a charging device and a charging method, to resolve a problem that it is not easy for a user to use a to-be-charged device when an existing wireless charging device is performing charging.

To resolve the technical problem, this application is implemented as follows.

According to a first aspect, an embodiment of this application provides a charging device, including:
a housing, where the housing includes an accommodating cavity and a charging position disposed on an outer surface of the housing;
a resonant wireless charging apparatus, where the resonant wireless charging apparatus is disposed in the housing, and a discharging end of the resonant wireless charging apparatus is located at the charging position;
an air-spaced charging apparatus, where the air-spaced charging apparatus includes an antenna assembly, and the antenna assembly is disposed in the accommodating cavity; and
a circuit board, where the circuit board includes a first charging circuit and a feed source, the first charging circuit is electrically connected to the resonant wireless charging apparatus, and the feed source is connected to the antenna assembly to implement air-spaced charging.

According to a second aspect, an embodiment of this application provides a charging method. The charging method is applied to the charging device in the first aspect, and includes:
controlling, in a case that it is detected that a first electronic device is placed at a charging position, a resonant wireless charging apparatus to perform wireless charging on the first electronic device; and
controlling, in a case that an air-spaced charging situation sent by a second electronic device is received, an air-spaced charging apparatus to perform air-spaced charging on the second electronic device.

According to the charging device provided in the embodiment of this application, because the charging device includes the resonant wireless charging apparatus and the air-spaced charging apparatus, wireless charging may be performed by using the charging position, or air-spaced charging may be performed by using the air-spaced charging apparatus, thereby helping the user use the electronic device in a charging process.

### BRIEF DESCRIPTION OF DRAWINGS

FIG. 1 is a structural exploded diagram of a charging device according to an embodiment of this application;
FIG. 2 is a schematic structural diagram of a charging device when no electronic device is placed at a charging position according to an embodiment of this application;
FIG. 3 is a schematic structural diagram of a charging device when an electronic device is placed at a charging position according to an embodiment of this application;
FIG. 4 is a first schematic structural diagram of an antenna assembly in an extension state according to an embodiment of this application;
FIG. 5 is a second schematic structural diagram of an antenna assembly in an extension state according to an embodiment of this application;
FIG. 6 is a first working principle diagram of a charging device according to an embodiment of this application;
FIG. 7 is a second working principle diagram of a charging device according to an embodiment of this application;
FIG. 8 is a flowchart of a charging method according to an embodiment of this application; and
FIG. 9 is a third working principle diagram of a charging device according to an embodiment of this application.

### DESCRIPTION OF EMBODIMENTS

The following clearly and completely describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects instead of describing a specific order or sequence. It should be understood that data used in such way are interchangeable in a proper circumstance, so that the embodiments of this application can be implemented in an order other than the order illustrated or described herein. Objects classified by "first", "second", and the like are usually of a same type, and the number of objects is not limited. For example, there may be one or more first objects. In addition, in this specification and the claims, "and/or" represents at least one of connected objects, and a character "/" usually represents an "or" relationship between associated objects.

With reference to the accompanying drawings, a charging device and a charging method provided in embodiments of this application are described in detail by using specific examples and application scenarios for the embodiments.

To resolve a problem in the background, an air-spaced charging technology is proposed in conventional technologies. In this way, wireless charging can be implemented, and a to-be-charged device can be used normally by a user in a charging process. As the air-spaced charging technology is increasingly mature, a wireless charging device is to be gradually eliminated. In this way, a technical problem that a large quantity of existing wireless charging devices are processed as electronic waste, thereby causing resource waste, is caused.

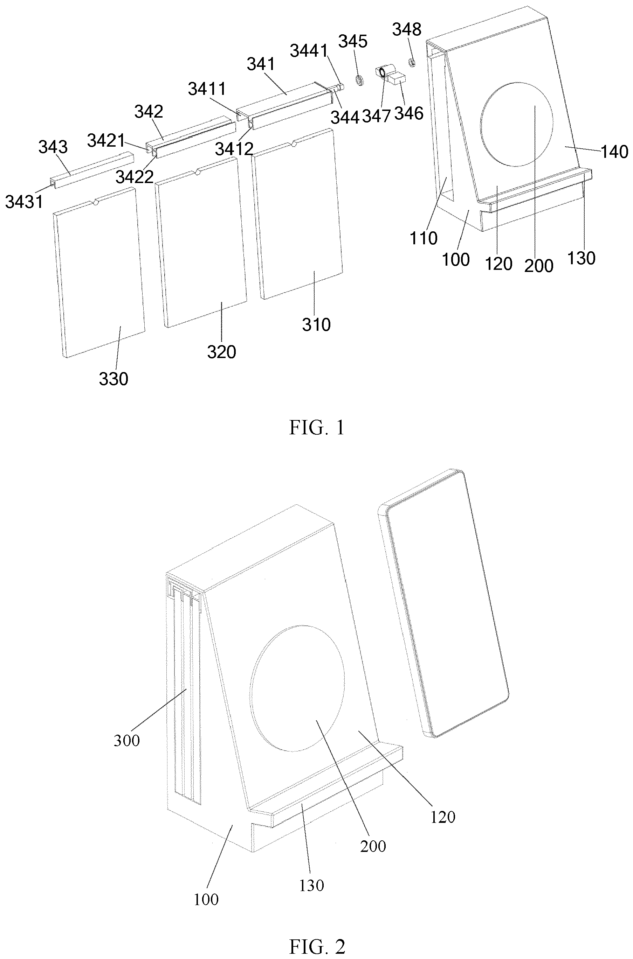

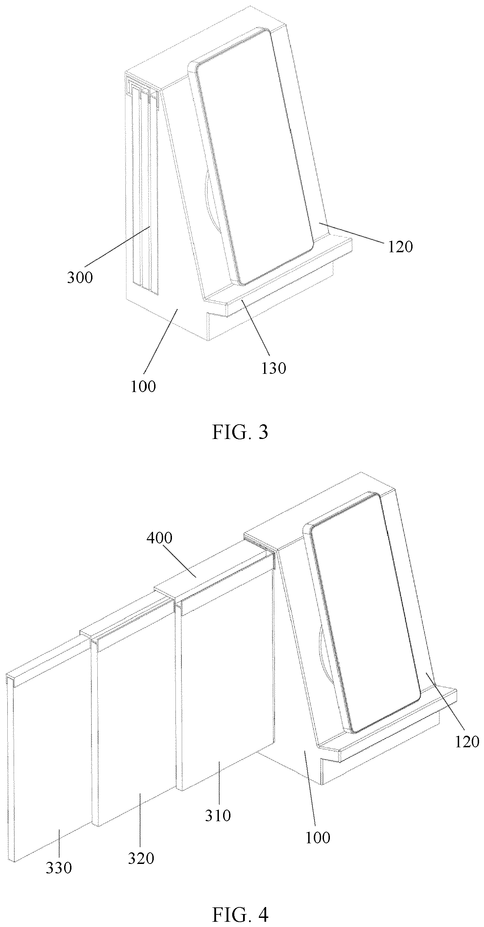

Based on this, in embodiments of this application, as shown in FIG. 1 to FIG. 5, a resonant wireless charging apparatus 200 is integrated with an air-spaced charging apparatus, so that a charging device may be wirelessly charged by using a charging position 120, or may be charged over the air by using the air-spaced charging apparatus. In this way, the existing resonant wireless charging apparatus 200 may be used, to prevent the resonant wireless charging apparatus 200 that is normally used from being processed as electronic waste. In addition, because the charging device further includes the air-spaced charging apparatus, in a charging process, the electronic device does not need to be placed at a specific position, so that the user may easily and normally use the electronic device in the charging process.

FIG. 1 to FIG. 5 show a charging device according to embodiments of this application. The charging device includes:
a housing 100, where the housing 100 includes an accommodating cavity 110 and a charging position 120 disposed on an outer surface of the housing 100;
a resonant wireless charging apparatus 200, where the resonant wireless charging apparatus 200 is disposed in the housing 100, and a discharging end of the resonant wireless charging apparatus 200 is located at the charging position 120;
an air-spaced charging apparatus, where the air-spaced charging apparatus includes an antenna assembly 300, and the antenna assembly 300 is disposed in the accommodating cavity 110; and
a circuit board, where the circuit board includes a first charging circuit and a feed source, the first charging circuit is electrically connected to the resonant wireless charging apparatus 200, and the feed source is connected to the antenna assembly 300 to implement air-spaced charging.

Refer to FIG. 2. The charging position 120 may be jointly formed by an oblique plane 140 on a surface of the housing 100 and a support board 130 at a bottom of the oblique plane 140, and a charging end of the resonant wireless charging apparatus 200 is located on the oblique plane 140. In this way, when a user places an electronic device such as a mobile phone at the charging position 120, the resonant wireless charging apparatus 200 may charge the electronic device. The resonant wireless charging apparatus 200 may be a common resonant wireless charging apparatus in the conventional technologies, and may specifically include a housing and a coil in the housing.

The charging device may further include a power supply cable configured to connect to an external power supply. For example, the power supply cable may be a plug, and the plug is connected to an external socket, to supply power to the charging device. In addition, the charging device may further include a charging battery. In this way, the charging battery may store power, to form a portable charging device.

It can be understood that the first charging circuit may supply power to the coil in the resonant wireless charging apparatus 200, to generate a resonance, thereby implementing wireless charging on the electronic device. The feed source may output an electromagnetic wave, and radiate the electromagnetic wave through the antenna assembly 300, to implement air-spaced charging on the electronic device.

It can be understood that the resonant wireless charging apparatus 200 and air-spaced charging apparatus may operate simultaneously. That is, different electronic devices may be simultaneously charged by using the resonant wireless charging apparatus 200 and the air-spaced charging apparatus.

In this implementation, because the charging device includes the resonant wireless charging apparatus 200 and the air-spaced charging apparatus, wireless charging may be performed by using the charging position 120, or air-spaced charging may be performed by using the air-spaced charging apparatus, thereby helping the user use the electronic device in a charging process.

Optionally, the antenna assembly 300 includes at least two radiation boards. The radiation board includes an array antenna layer located on a surface.

The feed source includes at least two sub-feed sources that are in a one-to-one correspondence with the at least two radiation boards. One radiation board is electrically connected to one corresponding sub-feed source.

In this implementation, the antenna assembly 300 includes at least two radiation boards, and different radiation boards and different sub-feeders respectively form different antennas. In this way, antennas formed by different radiation boards may charge different electronic devices simultaneously, to implement a technical effect of performing air-spaced charging on at least two electronic devices simultaneously.

Optionally, the radiation board includes a first end surface and a second end surface that are opposite to each other. The array antenna layers are respectively disposed on the first end surface of the radiation board and the second end surface of the radiation board.

In this implementation, the array antenna layers are respectively disposed on two opposite sides of the radiation board. In this way, the array antenna layers on the two opposite sides of the radiation board can radiate electromagnetic waves simultaneously, thereby improving an effect of air-spaced charging. In addition, the array antenna layers on the two opposite sides of the radiation board may further form different antennas, to implement simultaneous charging on different electronic devices.

Optionally, the array antenna layer includes a first sub-array antenna and a second sub-array antenna. A polarization direction of the first sub-array antenna is perpendicular to a polarization direction of the second sub-array antenna.

In this implementation, the polarization direction of the first sub-array antenna is perpendicular to the polarization direction of the second sub-array antenna, so that the array antenna layer forms a dual-polarized antenna array structure. Therefore, electromagnetic wave radiation can be performed in different directions, to implement charging on electronic devices in different directions of the charging device.

Optionally, the radiation board further includes a circularly polarized composite network layer and at least two scanning feeding network layers with different angles. The first sub-array antenna is electrically connected to a corresponding sub-feed source through a first network layer, and the second sub-array antenna is electrically connected to a corresponding sub-feed source through a second network layer.

The first network layer and the second network layer are different network layers in the circularly polarized composite network layer and the at least two scanning feeding network layers with different angles.

The circularly polarized composite network layer and the at least two scanning feeding network layers with different angles may be respectively configured to change propagation directions of electromagnetic waves transmitted from the feed sources to the array antenna layers. In this way, the array antenna layers on two sides of the same radiation board may respectively perform energy radiation in different directions, to implement charging on electronic devices in different directions of the charging device.

Specifically, the at least two radiation boards may include a target radiation board. The target radiation board is any one of the at least two radiation boards. The target radiation board is electrically connected, through the first network layer, to a sub-feed source corresponding to the target radiation board. The second sub-array antenna is electrically connected, through the second network layer, to a sub-feed source corresponding to the target radiation board.

In an embodiment of this application, the radiation board includes a circularly polarized composite network layer, a 30-degree scanning feeding network layer, a 45-degree scanning feeding network layer, and a 60-degree scanning feeding network layer. The array antenna layers are disposed on two sides of the radiation board, and each array antenna includes a first sub-array antenna and a second sub-array antenna. That is, one radiation board includes two groups of first sub-array antennas and two groups of second sub-array antennas. In this way, the two groups of first sub-array antennas and the two groups of second sub-array antennas may be respectively electrically connected to corresponding sub-feed sources through different layers in the circularly polarized composite network layer, the 30-degree scanning feeding network layer, the 45-degree scanning feeding network layer, and the 60-degree scanning feeding network layer. Therefore, the radiation board may perform electromagnetic wave radiation respectively in four different directions, to further improve an effect of air-spaced charging.

The charging device may perform air-spaced charging on a same electronic device through antennas corresponding to different network layers, and receive a charging power of the electronic device when different network layers charge a same electronic device, and then may determine a target network layer. The target network layer is a network layer with a highest charging power for the electronic device in antennas corresponding to the foregoing network layers. Then, the antenna assembly may be controlled, based on a scanning angle of the network layer, to rotate to a corresponding angle, to increase a charging power of the charging device for the electronic device.

Optionally, still refer to FIG. 1 to FIG. 5. The antenna assembly 300 is slidably connected to an inner wall of the accommodating cavity 110, and the antenna assembly 300 may be switched between a retraction state and an extension state relative to the accommodating cavity 110.

It can be understood that when the antenna assembly 300 is in the retraction state, the antenna assembly 300 is accommodated in the accommodating cavity 110. When the antenna assembly 300 is in the extension state, the antenna assembly 300 is located outside the accommodating cavity 110.

In this implementation, the antenna assembly 300 is slidably connected to the accommodating cavity 110 of the housing 100. In this way, when the air-spaced charging apparatus needs to be used for performing air-spaced charging, the antenna assembly 300 may extend outside the accommodating cavity 110, thereby improving a radiation effect of the antenna assembly 300. When the air-spaced charging apparatus does not need to be used for performing air-spaced charging, the air-spaced charging apparatus may be accommodated in the accommodating cavity 110, thereby facilitating miniaturization design for the charging device.

Optionally, the antenna assembly 300 further includes a first slider 346 and a telescopic assembly 340. The at least two radiation boards are respectively connected to the telescopic assembly 340. The accommodating cavity 110 is provided with a first slide channel, and the first slider 346 is slidably connected to the first slide channel. One end of the telescopic assembly 340 is firmly connected to the first slider 346.

In a case that the antenna assembly 300 is in the retraction state, the telescopic assembly 340 retracts, and the at least two radiation boards are disposed in a stacking manner.

In a case that the antenna assembly 300 is in the extension state, the telescopic assembly 340 extends, and the at least two radiation boards are disposed in a staggered manner.

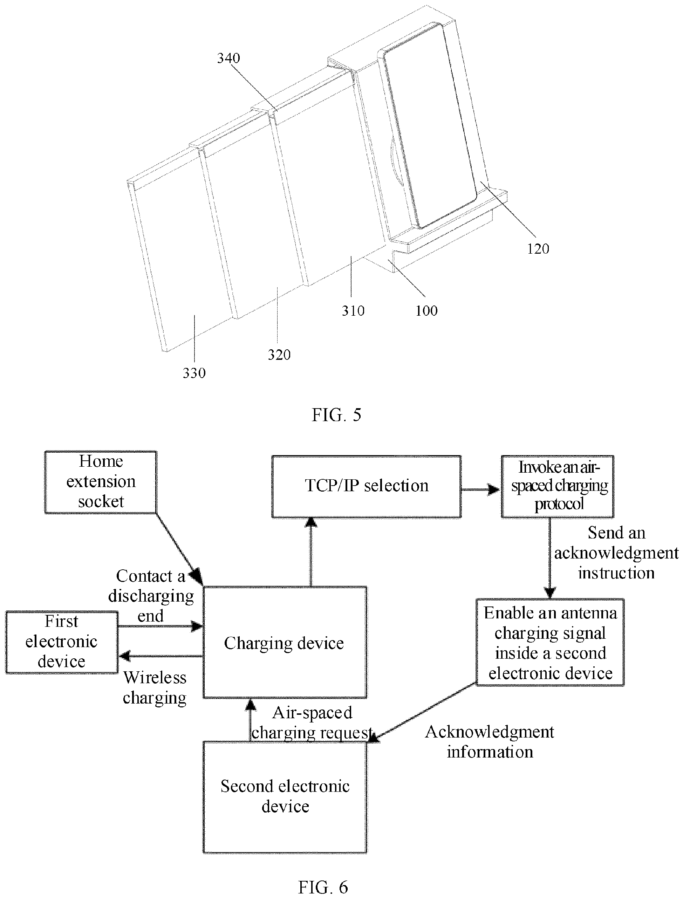

Specifically, refer to FIG. 5. The at least two radiation boards may be controlled, by using the telescopic assembly 340, to switch between an overlapping state and a staggering state. In this way, when the air-spaced charging apparatus needs to be used for performing air-spaced charging, the antenna assembly 300 may extend outside the accommodating cavity 110, and the telescopic assembly 340 may extend, so that the at least two radiation boards are disposed in a staggered manner, thereby increasing a radiation area of the antenna assembly 300 and improving a radiation effect. When the air-spaced charging apparatus does not need to be used for performing air-spaced charging, the air-spaced charging apparatus may be accommodated in the accommodating cavity 110, and the telescopic assembly 340 is retracted, so that the at least two radiation boards are disposed in a stacking manner, thereby facilitating implementation of miniaturization design for the charging device.

Optionally, refer to FIG. 5. In an embodiment of this application, the at least two radiation boards include a first radiation board 310, a second radiation board 320, and a third radiation board 330. The telescopic assembly 340 includes a first bar-shaped slide rail 341, a second bar-shaped slide rail 342, and a third bar-shaped slide rail 343.

The first bar-shaped slide rail 341 includes a first slide groove 3411 and a first installation groove 3412 that are disposed in parallel. The first slide groove 3411 and the first installation groove 3412 are separately arranged along a length direction of the first bar-shaped slide rail 341. One end of the first radiation board 310 is embedded in the first installation groove 3412. The second bar-shaped slide rail 342 is slidably connected to the first slide groove 3411, and the second bar-shaped slide rail 342 may extend or retract relative to the first slide groove 3411.

The second bar-shaped slide rail 342 includes a second slide groove 3421 and a second installation groove 3422 that are disposed in parallel. The second slide groove 3421 and the second installation groove 3422 are separately arranged along a length direction of the second bar-shaped slide rail 342. One end of the second radiation board 320 is embedded in the second installation groove 3422. The third bar-shaped slide rail 343 is slidably connected to the second slide groove 3421, and the third bar-shaped slide rail 343 may extend or retract relative to the second slide groove 3421.

The third bar-shaped slide rail 343 includes a third installation groove 3431. The third installation groove 3431 is arranged along a length direction of the third bar-shaped slide rail 343. One end of the third radiation board 330 is embedded in the third installation groove 3431.

Specifically, refer to FIG. 5. When the telescopic assembly 340 needs to be controlled to extend, the second bar-shaped slide rail 342 is controlled to extend relative to the first slide groove 3411, and the third bar-shaped slide rail 343 is controlled to extend relative to the second slide groove 3421. When the telescopic assembly 340 needs to be controlled to retract, the second bar-shaped slide rail 342 is controlled to retract relative to the first slide groove 3411, and the third bar-shaped slide rail 343 is controlled to retract relative to the second slide groove 3421.

Optionally, the first bar-shaped slide rail 341 is rotatably connected to the housing 100, the second bar-shaped slide rail 342 is rotatably connected to the first bar-shaped slide rail 341, and the third bar-shaped slide rail 343 is rotatably connected to the second bar-shaped slide rail 342.

In a case that the antenna assembly 300 is in the extension state, the first bar-shaped slide rail 341 may rotate relative to the housing 100, the second bar-shaped slide rail 342 may rotate relative to the first bar-shaped slide rail 341, and the third bar-shaped slide rail 343 may rotate relative to the second bar-shaped slide rail 342.

The second bar-shaped slide rail 342 may be directly rotatably connected to the first bar-shaped slide rail 341. For example, the first slide groove 3411 of the first bar-shaped slide rail 341 may be disposed as a cylindrical shape, which is not shown in the figure. In addition, the second bar-shaped slide rail 342 is disposed as a cylindrical shape, which is not shown in the figure. The second bar-shaped slide rail 342 includes a first segment and a second segment, and the second installation groove 3422 is disposed in the first segment. In a case that the first segment of the second bar-shaped slide rail 342 extends outside the first slide groove 3411, the second segment of the second bar-shaped slide rail 342 is located in the first slide groove 3411. In this case, the second segment of the second bar-shaped slide rail 342 may rotate relative to the first slide groove 3411, to drive the second radiation board 320 to rotate relative to the first bar-shaped slide rail 341, thereby implementing separate adjustment of a radiation angle of the second radiation board 320.

In addition, in another embodiment of this application, the second bar-shaped slide rail 342 and the first bar-shaped slide rail 341 may alternatively be connected through a rotary connector. For example, a side, close to a cavity bottom of the accommodating cavity 110, of the second bar-shaped slide rail 342 may be connected to a first universal joint, which is not shown in the figure. When the second bar-shaped slide rail 342 extends outside the first slide groove 3411, the first universal joint is located in the first slide groove 3411. In this case, the second bar-shaped slide rail 342 may rotate, through the first universal joint, freely relative to the first bar-shaped slide rail 341, to further facilitate separate adjustment of the radiation angle of the second radiation board 320.

It can be understood that the third bar-shaped slide rail 343 may be directly rotatably connected or may be rotatably connected through a second universal joint to the second bar-shaped slide rail 342. For a specific implementation, refer to an implementation in which the second bar-shaped slide rail 342 is rotatably connected to the first bar-shaped slide rail 341. To avoid repetition, the details are not described herein again.

Correspondingly, the first bar-shaped slide rail 341 may be directly rotatably connected or rotatably connected through a third universal joint to the housing 100. For a specific implementation, refer to an implementation in which the second bar-shaped slide rail 342 is rotatably connected to the first bar-shaped slide rail 341. To avoid repetition, the details are not described herein again.

Optionally, the first slider 346 is provided with a first through hole arranged along a telescopic direction of the antenna assembly 300, and the telescopic assembly 340 includes a rotating rod 344. The rotating rod 344 penetrates the first through hole, and the rotating rod 344 may rotate relative to the first slider 346, to drive the antenna assembly 300 to rotate.

Specifically, refer to FIG. 1. In an embodiment of this application, the first bar-shaped slide rail 341 includes the rotating rod 344. In this way, when the rotating rod 344 is rotating, the first bar-shaped slide rail 341 may be driven to rotate synchronously. Correspondingly, the second bar-shaped slide rail 342 and the third bar-shaped slide rail 343 rotate synchronously with the first bar-shaped slide rail 341, so that at least two radiation boards can be driven to rotate, and a radiation direction may be changed when the radiation board is being rotated. In this manner, the antenna assembly 300 may be controlled, based on a position of the electronic device that needs to be charged over the air, to rotate to a corresponding position, thereby further improving an effect of air-spaced charging.

Optionally, the telescopic assembly 340 further includes a first damping block 345, a second damping block 347, and a washer 348. The first damping block 345 is sleeved on the rotating rod 344, and the first damping block 345 is located on a side, facing the telescopic assembly 340. The second damping block 347 is firmly connected to an end surface of the first slider 346 facing the telescopic assembly 340, and the first damping block 345 abuts against the second damping block 347.

A first annular protrusion 3441 is disposed on a surface of the rotating rod. The first annular protrusion 3441 is located on a side, opposite to the telescopic assembly 340, of the first slider 346. The washer 348 is sleeved on the rotating rod 344, and the washer 348 is disposed between the first slider 346 and the first annular protrusion 3441. A first end surface of the washer 348 abuts against the first slider 346, and a second end surface of the washer 348 abuts against the first annular protrusion 3441.

Specifically, the first damping block 345 may be firmly connected to the rotating rod 344. The second damping block 347 may be formed integrally with the first slider 346. The washer 348 may be an elastic washer 348, and the elastic washer 348 is in an elastic compression state. In this way, under an action of an elastic force of the elastic washer 348, the first damping block 345 may abut against the second damping block 347.

In this implementation, the first damping block 345 abuts against the second damping block 347. In this way, when the rotating rod 344 is rotated to a specific position, a position between the rotating rod 344 and the first slider 346 can be ensured to be relatively fixed due to a friction resistance between the first damping block 345 and the second damping block 347, thereby locking a position of the radiation board.

Optionally, the charging device further includes a first driving assembly and a second driving assembly. The first driving assembly and the second driving assembly are separately electrically connected to the circuit board. In addition, the first driving assembly is configured to drive the antenna assembly 300 to switch between the retraction state and the extension state, and the second driving assembly is configured to drive the rotating rod 344 to rotate relative to the first slider 346.

Specifically, the first driving assembly may be a common electric telescopic apparatus in the conventional technologies, for example, an electric telescopic lever. A fixed end of the electric telescopic lever may be connected to the housing 100. In addition, a telescopic end of the electric telescopic lever is connected to the third bar-shaped slide rail 343. In this way, when the electric telescopic lever is extending, the telescopic assembly 340 may be driven to extend, and the antenna assembly 300 may be driven to extend from the accommodating cavity 110. Correspondingly, when the electric telescopic lever is retracting, the telescopic assembly 340 may be driven to be shortened, and the antenna assembly 300 may be driven to retract into the accommodating cavity 110.

The foregoing second driving assembly may be a motor. In this way, under a driving action of the motor, the rotating rod 344 may be driven to rotate relative to the first slider 346, to drive the radiation board to rotate, thereby adjusting a radiation direction of the radiation board.

In this implementation, the first driving assembly and the second driving assembly are disposed, so that when air-spaced charging needs to be performed, the antenna assembly 300 may be drive, through the first driving assembly and the second driving assembly, to move to a corresponding position, to improve an effect of air-spaced charging.

Refer to FIG. 6. In an embodiment of this application, a charging device may be connected to a home extension socket for continuous power supply to the charging device. When the charging device senses that a first electronic device is in contact with a discharging end of a resonant wireless charging apparatus, the resonant wireless charging apparatus may be controlled to perform wireless charging on the first electronic device. When a second electronic device sends an air-spaced charging request to the charging device, the charging device may perform selection of a Transmission Control Protocol/Internet Protocol (Transmission Control Protocol/Internet Protocol, TCP/IP), and then invoke an air-spaced charging protocol to send an acknowledgment instruction to the second electronic device. After receiving the acknowledgment instruction, if the second electronic device receives an acknowledgment operation from a user, the second electronic device enables an internal antenna charging signal and feeds back acknowledgment information to the charging device. The charging device may perform air-spaced charging on the second electronic device based on a power, in the acknowledgment information, selected by the user.

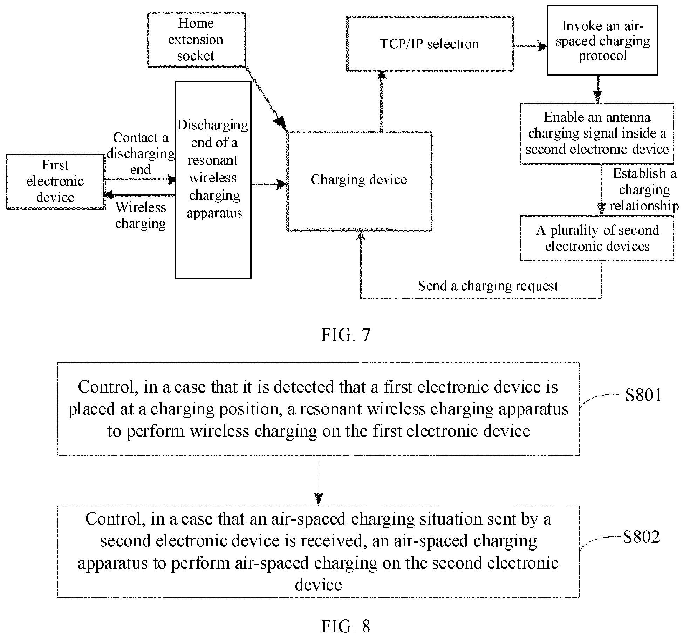

Refer to FIG. 7. In another embodiment of this application, when a charging device senses that a first electronic device is in contact with a discharging end of a resonant wireless charging apparatus, the resonant wireless charging apparatus may be controlled to perform wireless charging on the first electronic device. When a plurality of second electronic devices send an air-spaced charging request to the charging device simultaneously, the charging device may perform selection of a TCP/IP, and then invoke an air-spaced charging protocol to send an acknowledgment instruction to the second electronic device. After receiving the acknowledgment instruction, if the second electronic device receives an acknowledgment operation from a user, the second electronic device enables an internal antenna charging signal and feeds back acknowledgment information to the charging device. The charging device may simultaneously perform air-spaced charging on the plurality of second electronic devices based on a power, in the acknowledgment information, selected by the user.

FIG. 8 is a charging method according to an embodiment of this application. The charging method is applied to the charging device described in the foregoing embodiment. The method includes:
Step S801: Control, in a case that it is detected that a first electronic device is placed at a charging position, a resonant wireless charging apparatus to perform wireless charging on the first electronic device; and
Step S802: Control, in a case that an air-spaced charging situation sent by a second electronic device is received, an air-spaced charging apparatus to perform air-spaced charging on the second electronic device.

In this implementation, because the charging device includes the resonant wireless charging apparatus and the air-spaced charging apparatus, wireless charging may be performed by using the charging position, or air-spaced charging may be performed by using the air-spaced charging apparatus, thereby helping the user use the electronic device in a charging process.

Optionally, after the controlling a resonant wireless charging apparatus to perform wireless charging on the first electronic device, the method further includes:
in a case that it is detected that the first electronic device is separated from the charging position, and a current battery level of the first electronic device is less than a preset value, controlling the air-spaced charging apparatus to perform air-spaced charging on the first electronic device.

Specifically, in a case that the antenna assembly is in an extension state, and it is detected that the first electronic device is separated from the charging position, and the current battery level of the first electronic device is less than the preset value, the air-spaced charging apparatus is controlled to perform air-spaced charging on the first electronic device. The preset value may be 20% of the total battery level.

It can be understood that in a case that the antenna assembly is in a retraction state, and it is detected that the first electronic device is separated from the charging position, and the current battery level of the first electronic device is less than the preset value, a user with the first electronic device needs to actively request to establish an air-spaced charging connection to a charging device, to perform air-spaced charging on the first electronic device.

Optionally, the controlling, in a case that an air-spaced charging situation sent by a second electronic device is received, an air-spaced charging apparatus to perform air-spaced charging on the second electronic device includes:
in a case that the air-spaced charging situation sent by the second electronic device is received, controlling an antenna assembly of the air-spaced charging apparatus to extend relative to an accommodating cavity, and controlling the air-spaced charging apparatus to perform air-spaced charging on the second electronic device.

Specifically, the antenna assembly has a better radiation effect when extending relative to the accommodating cavity. Based on this, in this embodiment of this application, in a case that the air-spaced charging situation sent by the second electronic device is received, the antenna assembly is controlled to extend relative to the accommodating cavity, and the air-spaced charging apparatus is controlled to perform air-spaced charging on the second electronic device, thereby further improving air-spaced charging effect.

Optionally, after the controlling an air-spaced charging apparatus to perform air-spaced charging on the second electronic device, the method further includes:
receiving infrared encoded positioning information sent by the second electronic device, where the infrared encoded positioning information is used to indicate a current position of the second electronic device; and
controlling, based on the infrared encoded positioning information, an antenna assembly to rotate to a position corresponding to the second electronic device.

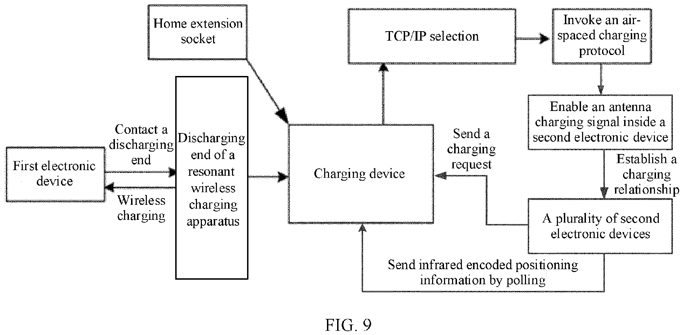

Specifically, refer to FIG. 9. When a second electronic device is performing air-spaced charging, a user may move while carrying the second electronic device, so that a relative position between the second electronic device and a charging device is changed. Therefore, the second electronic device may send infrared encoded positioning information to the charging device by polling. After receiving the infrared encoded positioning information, the charging device may parse the infrared encoded positioning information to determine a current position of the second electronic device, and then control an antenna assembly to rotate to a corresponding position, to ensure that the second electronic device always has a relatively high charging power, thereby further improving a charging effect of air-spaced charging.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element limited by "includes a..." does not preclude the existence of other identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiments may be implemented by software in addition to a required universal hardware platform or by hardware only. In most circumstances, the former is a preferred implementation. Based on such understanding, the technical solutions of this application essentially or the part contributing to existing technologies may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, or a network device) to perform the methods described in the embodiments of this application.

The embodiments of this application are described above with reference to the accompanying drawings, but this application is not limited to the foregoing implementations, and the foregoing implementations are only illustrative and not restrictive. Under the enlightenment of this application, a person of ordinary skill in the art can make many forms without departing from the purpose of this application and the protection scope of the claims, all of which fall within the protection of this application.

## Claims

1. A charging device, comprising:
a housing (100), wherein the housing (100) comprises an accommodating cavity (110) and a charging position (120) disposed on an outer surface of the housing (100);
a resonant wireless charging apparatus (200), wherein the resonant wireless charging apparatus (200) is disposed in the housing (100), and a discharging end of the resonant wireless charging apparatus (200) is located at the charging position (120);
an air-spaced charging apparatus, wherein the air-spaced charging apparatus comprises an antenna assembly (300), and the antenna assembly (300) is disposed in the accommodating cavity (110); and
a circuit board, wherein the circuit board comprises a first charging circuit and a feed source, the first charging circuit is electrically connected to the resonant wireless charging apparatus (200), and the feed source is connected to the antenna assembly (300) to implement air-spaced charging.

2. The charging device according to claim 1, wherein the antenna assembly (300) comprises at least two radiation boards, and the radiation board comprises an array antenna layer located on a surface; and
the feed source comprises at least two sub-feed sources that are in a one-to-one correspondence with the at least two radiation boards, and one radiation board is electrically connected to one corresponding sub-feed source.

3. The charging device according to claim 2, wherein the antenna assembly (300) is slidably connected to an inner wall of the accommodating cavity (110), and the antenna assembly (300) is capable of being switched between a retraction state and an extension state relative to the accommodating cavity (110).

4. The charging device according to claim 3, wherein the antenna assembly (300) further comprises a first slider (346) and a telescopic assembly (340), the at least two radiation boards are separately connected to the telescopic assembly (340), the accommodating cavity (110) is provided with a first slide channel, the first slider (346) is slidably connected to the first slide channel, and one end of the telescopic assembly (340) is firmly connected to the first slider (346);
in a case that the antenna assembly (300) is in the retraction state, the telescopic assembly (340) retracts, and the at least two radiation boards are disposed in a stacking manner; and
in a case that the antenna assembly (300) is in the extension state, the telescopic assembly (340) extends, and the at least two radiation boards are disposed in a staggered manner.

5. The charging device according to claim 4, wherein the at least two radiation boards comprise a first radiation board (310), a second radiation board (320), and a third radiation board (330), the telescopic assembly (340) comprises a first bar-shaped slide rail (341), a second bar-shaped slide rail (342), and a third bar-shaped slide rail (343);
the first bar-shaped slide rail (341) comprises a first slide groove (3411) and a first installation groove (3412) that are disposed in parallel, the first slide groove (3411) and the first installation groove (3412) are separately arranged along a length direction of the first bar-shaped slide rail (341), one end of the first radiation board (310) is embedded in the first installation groove (3412), the second bar-shaped slide rail (342) is slidably connected to the first slide groove (3411), and the second bar-shaped slide rail (342) is capable of extending or retracting relative to the first slide groove (3411);
the second bar-shaped slide rail (342) comprises a second slide groove (3421) and a second installation groove (3422) that are disposed in parallel, the second slide groove (3421) and the second installation groove (3422) are separately arranged along a length direction of the second bar-shaped slide rail (342), one end of the second radiation board (320) is embedded in the second installation groove (3422), the third bar-shaped slide rail (343) is slidably connected to the second slide groove (3421), and the third bar-shaped slide rail (343) is capable of extending or retracting relative to the second slide groove (3421); and
the third bar-shaped slide rail (343) comprises a third installation groove (3431), the third installation groove (3431) is arranged along a length direction of the third bar-shaped slide rail (343), and one end of the third radiation board (330) is embedded in the third installation groove (3431).

6. The charging device according to claim 5, wherein the first bar-shaped slide rail (341) is rotatably connected to the housing (100), the second bar-shaped slide rail (342) is rotatably connected to the first bar-shaped slide rail (341), and the third bar-shaped slide rail (343) is rotatably connected to the second bar-shaped slide rail (342); and
in a case that the antenna assembly (300) is in the extension state, the first bar-shaped slide rail (341) is capable of rotating relative to the housing (100), the second bar-shaped slide rail (342) is capable of rotating relative to the first bar-shaped slide rail (341), and the third bar-shaped slide rail (343) is capable of rotating relative to the second bar-shaped slide rail (342).

7. The charging device according to claim 4, wherein the first slider (346) is provided with a first through hole arranged along a telescopic direction of the antenna assembly (300), and the telescopic assembly (340) comprises a rotating rod (344), the rotating rod (344) penetrates the first through hole, and the rotating rod (344) is capable of rotating relative to the first slider (346), to drive the antenna assembly (300) to rotate.

8. The charging device according to claim 7, wherein the telescopic assembly (340) further comprises a first damping block (345), a second damping block (347), and a washer (348), the first damping block (345) is sleeved on the rotating rod (344), the first damping block (345) is located on a side, facing the telescopic assembly (340), of the first slider (346), the second damping block (347) is firmly connected to an end surface of the first slider (346), facing the telescopic assembly (340), and the first damping block (345) abuts against the second damping block (347); and
a first annular protrusion (3441) is disposed on a surface of the rotating rod, the first annular protrusion (3441) is located on a side, opposite to the telescopic assembly (340), of the first slider (346), the washer (348) is sleeved on the rotating rod (344), and the washer (348) is disposed between the first slider (346) and the first annular protrusion (3441), a first end surface of the washer (348) abuts against the first slider (346), and a second end surface of the washer (348) abuts against the first annular protrusion (3441).

9. The charging device according to claim 7, wherein the charging device further comprises a first driving assembly and a second driving assembly, the first driving assembly and the second driving assembly are separately electrically connected to the circuit board, the first driving assembly is configured to drive the antenna assembly (300) to switch between the retraction state and the extension state, and the second driving assembly is configured to drive the rotating rod (344) to rotate relative to the first slider (346).

10. The charging device according to any one of claims 2 to 9, wherein the radiation board comprises a first end surface and a second end surface that are opposite to each other, and the array antenna layers are respectively disposed on the first end surface of the radiation board and the second end surface of the radiation board.

11. The charging device according to any one of claims 2 to 9, wherein the array antenna layer comprises a first sub-array antenna and a second sub-array antenna, and a polarization direction of the first sub-array antenna is perpendicular to a polarization direction of the second sub-array antenna.

12. The charging device according to claim 11, wherein the radiation board further comprises a circularly polarized composite network layer and at least two scanning feeding network layers with different angles, the first sub-array antenna is electrically connected to a corresponding sub-feed source through a first network layer, and the second sub-array antenna is electrically connected to a corresponding sub-feed source through a second network layer; and
the first network layer and the second network layer are different network layers in the circularly polarized composite network layer and the at least two scanning feeding network layers with different angles.

13. A charging method, applied to the charging device according to any one of claims 1 to 12, wherein the charging method comprises:
controlling, in a case that it is detected that a first electronic device is placed at a charging position, a resonant wireless charging apparatus to perform wireless charging on the first electronic device; and
controlling, in a case that an air-spaced charging situation sent by a second electronic device is received, an air-spaced charging apparatus to perform air-spaced charging on the second electronic device.

14. The charging method according to claim 13, wherein after the controlling a resonant wireless charging apparatus to perform wireless charging on the first electronic device, the method further comprises:
in a case that it is detected that the first electronic device is separated from the charging position, and a current battery level of the first electronic device is less than a preset value, controlling the air-spaced charging apparatus to perform air-spaced charging on the first electronic device.

15. The charging method according to claim 13, wherein the controlling, in a case that an air-spaced charging situation sent by a second electronic device is received, an air-spaced charging apparatus to perform air-spaced charging on the second electronic device comprises:
in a case that the air-spaced charging situation sent by the second electronic device is received, controlling an antenna assembly of the air-spaced charging apparatus to extend relative to an accommodating cavity, and controlling the air-spaced charging apparatus to perform air-spaced charging on the second electronic device.

16. The charging method according to claim 13, wherein after the controlling an air-spaced charging apparatus to perform air-spaced charging on the second electronic device, the method further comprises:
receiving infrared encoded positioning information sent by the second electronic device, wherein the infrared encoded positioning information is used to indicate a current position of the second electronic device; and
controlling, based on the infrared encoded positioning information, an antenna assembly to rotate to a position corresponding to the second electronic device.
